# EUROPEAN PATENT APPLICATION

(11) **EP 0 806 778 A1**
(43) Date of publication of application: **12.11.1997**
(21) Application number: 97201247.0
(22) Date of filing: 25.04.1997
(51) Int. Cl.: G21C 19/20

(54) **Method and handling equipment for nuclear fuel handling**

(30) Priority: 10.05.1996 SE 9601809
(71) Applicant: ABB ATOM AB, 721 63 Västeras (SE)
(72) Inventor: Bäversten, Bengt, 723 53 Västeras (SE); Nyström, Karel-Erik, 722 45 Västeras (SE); Rosengren, Anders, 724 65 Västeras (SE); Suvanto, Antti, 723 49 Västeras (SE)
(74) Representative: Dahlstrand, Björn

(57) **Abstract**

The present invention relates to a method and equipment (13) for lifting of fuel assemblies (4) and/or control rods out of/into a reactor vessel (1) in a shutdown nuclear reactor. The reactor vessel (1) comprises a reactor core (5) with a plurality of fuel assemblies (4) and control rods (11). The equipment (13) lifts one or more fuel assemblies (4) and/or control rods (11) out of the reactor core (5) and arranges them in a first cassette (14). The first cassette (14) is transported to a fuel pool (3) with a transport means (9) whereas a second cassette (14) is filled with fuel assemblies (4) and/or control rods (11) with the aid of the equipment (13).

## Description

### TECHNICAL FIELD

The present invention relates to a method and a device for handling fuel assemblies in a light-water nuclear power reactor comprising a reactor vessel with a reactor core. More particularly, the invention relates to such handling of fuel assemblies which occurs when fuel assemblies are to be replaced or transferred to a new position when the reactor vessel or parts connected thereto are to be serviced and therefore have to be emptied of fuel assemblies.

### BACKGROUND ART

A light-water nuclear power plant comprises a reactor vessel which encloses a reactor core. The reactor core comprises a large number of fuel assemblies. More particularly, the core comprises normally between 400 and 1000 fuel assemblies. A fuel assembly comprises a bundle of fuel rods. The fuel rods in turn comprise pellets of a nuclear fuel. A coolant in the form of water is arranged to flow from below and up through the core to cool the fuel rods while nuclear fission is in progress. The heated coolant is evaporated whereupon it is passed to a turbine for conversion into electric energy.

After a certain burnup time of the fuel assemblies, it is normal either to reject them or to transfer them within the fuel core in order to burn them out further. Such refuelling or transfer of fuel takes place upon shutdown of the nuclear power plant. During the shutdown, work is normally carried out also in the reactor vessel and in other systems which are connected to the reactor vessel. Such a shutdown is very costly and takes approximately three to eight weeks. Therefore, it is desirable to do whatever is possible to reduce this shutdown time to the shortest possible time.

The refuelling in a nuclear power plant thus comprises (a) replacing burnt-up fuel assemblies with new ones, and (b) transferring a large number of fuel assemblies in the core to obtain optimum burnup. During such refuelling, the fuel assemblies are normally handled one by one. When the reactor vessel is opened to make the fuel assemblies accessible, a gripper is moved down into the core and is brought to grip a fuel assembly which is to be temporarily placed in a fuel pool. Normally, control rods arranged between the fuel assemblies are left in the reactor vessel. Further fuel assemblies are lifted out of the core and placed at an arbitrary location in the pool. Thereafter, new fuel assemblies are lifted from the pool into the reactor vessel to the empty positions. The fuel assemblies are thus lifted one by one. The fuel assemblies which are to be transferred within the core are normally moved direct from their old to their new positions.

In the event that work has to be carried out in the reactor vessel or in adjacently located systems, such as pumps directly connected to the reactor vessel, a suitable number of fuel assemblies have to be lifted out therefrom and be temporarily placed at an arbitrary location in the fuel pool. In certain cases, the whole reactor vessel may have to be emptied of fuel assemblies.

The above-mentioned gripper is normally associated with equipment comprising a so-called fuel charging/discharging machine located in the reactor hall surrounding the reactor pool. With the aid of this fuel charging/discharging machine, fuel assemblies and/or control rods may be lifted up one by one from the reactor core and be transported to the fuel pool and vice versa.

While the fuel charging/discharging machine is being used for work in the reactor vessel, access to the reactor vessel by other equipment is prevented, which in turn prevents parallel work operations to be carried out. The same fuel charging/discharging machine is used for the operations in connection with service of the reactor vessel or parts connected to the vessel.

The object of the present invention is to provide handling equipment which permits parallel work operations so that the total shutdown time may be reduced. Parallel work operations may, for example, be lifting of fuel assemblies and control rods into and out of the reactor vessel, respectively, while at the same time already-removed groups of fuel assemblies and control rods are transported to the adjacently located fuel pool.

### SUMMARY OF THE INVENTION, ADVANTAGES

The present invention relates to a method and handling equipment which considerably reduce the time of a shutdown where fuel assemblies are to be lifted out of and into a reactor vessel, respectively. The characteristic features for providing such a method and handling equipment are described in the characterizing part of claims 1 and 2, respectively.

According to one aspect of the invention, internal handling equipment is arranged at the upper limiting surface of the reactor vessel arranged in a reactor pool. This handling equipment is separate from the existing equipment which is normally provided in a reactor hall surrounding a reactor pool in which the reactor vessel is arranged. The handling equipment is provided with means for remote control in such a way that it can be controlled in a work operation which is carried out in parallel with a work operation which is carried out by the existing equipment. The internal handling equipment is preferably designed such that it only occupies an area, the size of which corresponds to a quadrant of the reactor vessel.

In this way, also other equipment, such as a fuel charging/discharging machine included in the existing equipment of the reactor hall, is allowed access to the reactor vessel while at the same time the handling equipment is operating therein.

The handling equipment is advantageously mounted to the flange of the reactor vessel. The flange may be provided with a rail permitting the handling equipment to be simply transferred to a suitable position for the work operation in question. Since the vessel flange is usually substantially circular, this arrangement gives the handling equipment a large operating range while at the same time the handling equipment has a small extent. The handling equipment may, for example, be designed as a robot or a manipulator arm or as a gantry crane.

The advantage of the invention is that the internal handling equipment disposed at the flange of the reactor vessel occupies a smaller space in the reactor vessel than the equipment present in the reactor hall. This permits parallel work operations to be carried out in the reactor vessel with the aid of the equipment present in the reactor hall. By enabling parallel work operations, the total time of shutdown of the nuclear reactor can be reduced when fuel assemblies and/or control rods are to be lifted out of and into the reactor vessel, respectively.

### BRIEF DESCRIPTION OF THE DRAWINGS

The invention will be most readily understood with reference to the accompanying drawings.

Figure 1 schematically shows, in a view from the side, a reactor vessel in a reactor pool and an adjacently located fuel pool. Further, internal handling equipment according to the invention is schematically shown.

Figure 2a shows in perspective view an embodiment of handling equipment according to the invention. Figure 2b shows, in a section A-A in Figure 2a, how the handling equipment is arranged at a flange of a reactor vessel.

### DESCRIPTION OF THE PREFERRED EMBODIMENTS

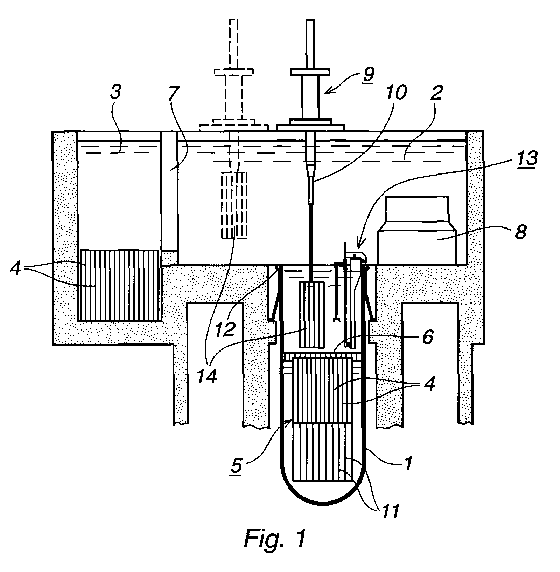

Figure 1 shows part of a nuclear power plant comprising a reactor vessel 1 with a removed reactor vessel cover, not shown in the figure, arranged in a water-filled reactor pool 2. Further, a so-called fuel pool 3 is shown arranged adjacent to the reactor pool 2. The fuel pool 3 is substantially designed for temporary storage of new and completely or partially burnt-up fuel assemblies 4, respectively. The reactor vessel 1 comprises a core 5 with a plurality of fuel assemblies 4 and a core grid 6 arranged above the core 5. The reactor pool 2 is connected to the fuel pool 3 via a closable opening 7. The other internal parts 8 of the reactor can be temporarily arranged in the reactor pool 2. Internal handling equipment 13 for lifting of fuel assemblies 4 and control rods 11 out of/into the reactor core 5 is arranged at the upper limiting surface 12 of the reactor vessel 1 arranged in the reactor pool 2.

During shutdown of the nuclear reactor, the reactor vessel 1 is filled up with water and the reactor vessel cover removed. Then, the reactor pool 2 above the reactor vessel 1 is filled with water and the port 7 between the reactor pool 2 and the fuel pool 3 is opened. Internal reactor parts 8 arranged above the core 5 are lifted out and arranged in the reactor pool 2. The core grid 6 and the fuel assemblies 4 arranged below the core grid are now available for a gripper 9 arranged in the reactor hall. The internal handling equipment 13 comprises, for example, a manipulator arm 16 for lowering into the reactor vessel 1 and lifting of one or more fuel assemblies 4 and/or control rods 11.

To bring about a forced transport o fuel assemblies 4 and/or control rods 11 into and out of the reactor vessel 1, respectively, a cassette 14 is provided which accommodates a plurality of fuel assemblies 4 and/or control rods 11 in the reactor vessel 1 above the reactor core 5. The internal handling equipment 13 then loads the cassette 14 with a suitable number of fuel assemblies 4 and/or control rods 11. The equipment 9 present in the reactor hall then transports the loaded cassette 14 to the fuel pool 3. Figure 1 shows in dashed lines the existing equipment 9 during transport of a cassette 14. While the loaded cassette 14 is being transported to the fuel pool 3 with the aid of the existing equipment, a new cassette 12 is loaded with fuel assemblies 4 and/or control rods 11 with the aid of the internal handling equipment 13. When it is time again to lift the removed fuel assemblies 4 and/or control rods 11 into the reactor core, the method steps described above are reversed.

A cassette 14 described above comprises, for example, four, eight or twelve positions for fuel assemblies 4 and/or control rods 11.

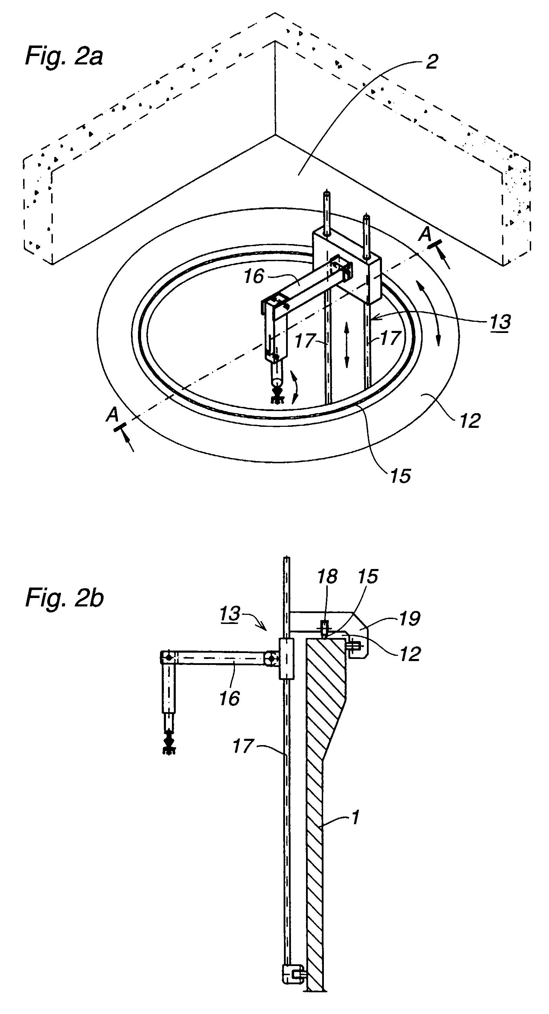

Figures 2a, 2b show internal handling equipment 13 arranged at the upper limiting surface 12 of the reactor vessel 1 disposed in the reactor pool 3. More particularly, the handling equipment 13 is arranged at the flange 12 of the reactor vessel 1. Associated with the flange 12 is a rail 15 on which the handling equipment 13 can be caused to move such that the handling equipment 13 can be moved in a simple manner to a suitable position in the reactor vessel 1 for the work operation in question. The handling equipment 13 is designed so as only to occupy an area which, in size, corresponds to a quadrant of the reactor vessel 1. In this way, the handling equipment 13 with a small extent may be given a large operating range and also allow the existing equipment 9 access to the reactor vessel 1 while at the same time the handling equipment 13 operates therein.

The handling equipment 13 shown in Figures 2a, 2b comprises a manipulator arm 16. The manipulator arm 16 is associated with a vertical member, in Figure 2a shown as two substantially parallel and vertical slide rails 17, along which the manipulator arm 16 can be transferred in the vertical direction in the reactor vessel 1. Via a rail-mounted device 18, the manipulator arm 16 is connected to the rail 15 on the flange 12 of the reactor vessel 1. The rail-mounted device 18 is connected to a supporting member 19. The supporting member 19 is connected to the slide rail 17 and adapted to run on the outside of the reactor vessel 1. The handling equipment 13 is suitably designed to be remote-controlled.

## Claims

1. A method for lifting of fuel assemblies (4) and/or control rods (11) out of/into a reactor vessel (1) in a shutdown nuclear reactor, wherein the reactor vessel (1) comprises a reactor core (5) with a plurality of fuel assemblies (4) and control rods (11) and wherein a fuel pool (3) is arranged adjacent the reactor vessel (1), **characterized** in that a plurality of fuel assemblies (4) and/or control rods (11) are lifted out of the reactor core (5) by means of internal handling equipment (13) and that the removed fuel assemblies (4) and/or control rods (11) are arranged in a first cassette (14) and that the first cassette (14) is transported to the fuel pool (3) by means of a transfer member (9) whereas a second cassette (14) is filled with fuel assemblies (4) and/or control rods (11) with the aid of the internal handling equipment (13).

2. Handling equipment (13) for lifting of fuel assemblies (4) and/or control rods (11) out of/into a reactor vessel (1) in a nuclear reactor, wherein the reactor vessel (1) comprises a reactor core (5) with a plurality of fuel assemblies (4) and control rods (11) and wherein a fuel pool (3) is arranged adjacent the reactor vessel (1), **characterized** in that it is disposed at the upper limiting surface (12) of the reactor vessel (1) and that it comprises a lifting member (16) which is adapted to lift one or more fuel assemblies (4) and/or control rods (11), and that the lifting member (16) is transferable to an arbitrary position in the reactor vessel (1) both in the vertical direction and polarly along the circumference of the reactor vessel (1).

3. Handling equipment (13) according to claim 2, **characterized** in that the lifting member (16) is adapted to be transferable in the vertical direction along a slide rail (17) in the reactor vessel (1) and polarly along a rail (15).

4. Handling equipment (13) according to claim 2 or 3, **characterized** in that it occupies approximately one-fourth of a horizontal section in the reactor vessel (1).
